(19) Europäisches Patentamt
European Patent Office
Office européen des brevets

(11) Veröffentlichungsnummer: **0 271 781 B1**

(12) **EUROPÄISCHE PATENTSCHRIFT**

(45) Veröffentlichungstag der Patentschrift: **27.05.92**

(51) Int. Cl.$^5$: **C09D 11/02**

(21) Anmeldenummer: **87117930.5**

(22) Anmeldetag: **04.12.87**

(54) **Druckfarbe.**

(30) Priorität: **16.12.86 US 942478**

(43) Veröffentlichungstag der Anmeldung:
**22.06.88 Patentblatt 88/25**

(45) Bekanntmachung des Hinweises auf die Patenterteilung:
**27.05.92 Patentblatt 92/22**

(84) Benannte Vertragsstaaten:
**CH DE FR GB LI**

(56) Entgegenhaltungen:
**EP-A- 0 014 962**
**DE-A- 2 340 443**
**FR-A- 2 442 257**

(73) Patentinhaber: **MOBAY CORPORATION**
**Patent Department Mobay Road**
**Pittsburgh Pennsylvania 15205-9741(US)**

Patentinhaber: **BAYER AG**

**W-5090 Leverkusen 1 Bayerwerk(DE)**

(72) Erfinder: **Prochaska, Helmut P.**
**90 Pines Lake Drive**
**East Wayne, N.J. 07470(US)**
Erfinder: **Tames, Walter**
**11 Roosevelt Drive**
**Hillside, N.J. 07205(US)**
Erfinder: **Kunde, Klaus, Dr.**
**Uppersberg 45**
**W-5090 Leverkusen 1(DE)**
Erfinder: **Haus, Artur, Dr.**
**Zum Eschental 8**
**W-5063 Overath(DE)**
Erfinder: **Reuter, Knud, Dr.**
**Scheiblerstrasse 99**
**W-4150 Krefeld(DE)**

(74) Vertreter: **Zobel, Manfred, Dr. et al**
**c/o BAYER AG Konzernverwaltung RP Patente Konzern**
**W-5090 Leverkusen 1 Bayerwerk(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine Druckfarbe, vorzugsweise eine Buch- oder Offsetdruckfarbe.

Gebräuchliche Druckfarben, insbesondere Buch- und Offsetdruckfarben bestehen neben anderen Bestandteilen, z.B. Mineralölen, Sikkativen und Hautverhinderungsmitteln etc., im wesentlichen aus einem Firnis und Pigmenten, wobei für den Vierfarbdruck neben Schwarz, wofür z.B. Ruß Verwendung findet, organische Pigmente in den Farben Gelb, Magenta und Cyan benutzt werden. Der Firnis enthält z.B. Alkydharze, Hartharze sowie Lösungs- bzw. Verdünnungsmittel.

Bei der heute fast ausschließlich geübten Verwendung organische Pigmente entstehen Druckfarbensysteme, die in vieler Hinsicht ausreichende Druckergebnisse im Bogen- und Rollenbuch- und -offsetdruck erbringen, dennoch bestehe ein ständiger Bedarf nach weiteren Verbesserungen, z.B. in Farbstärke, Lasur (Transparenz) und Brillanz.

Beispielsweise können diese genannten Eigenschaften mit organischen Pigmenten nicht über gewisse Grenzen hinaus verbessert werden, die u,a, durch die Teilchengroße der dispergierten Pigmente bestimmt werden.

Es ist bekannt, Farbstoffmoleküle durch chemische Kombination mit Isocyanaten, die zur Herstellung von Polyurethanen dienen, in Polyurethankunststoffe einzubauen.

Im allgemeinen setzt man den Farbstoff bei der Polyurethanherstellung gleichzeitig mit der isocyamatreaktiven Komponente, z,B, einem Polyether-oder Polyesterdiol, mit dem Isocyanat um.

Aus der US-PS 3 137 671 ist es bekannt, die polyurethanbildenden Ausgangskomponenten simultan mit dem Farbstoff zu einem vernetzten Polyurethan umzusetzen. Es wird auch beschrieben, vor der eigentlichen Polyurethanherstellung ein Gemisch aus Farbstoff und den Reaktanden herzustellen.

Das vernetzte Endprodukt kann als Schaum oder Lack hergestellt werden oder in gemahlener Form als Pigment zur Färbung von Polyvinylchloridharzen Verwendung finden. Die US-PS 3 228 780 beschreibt die Herstellung eines gefärbten Schaums durch Zugabe eines Pigments mit potentiell isocyanatreaktiven Aminogruppen zu den polyurethanbildenden Reaktanden. Die US-PS 3 994 875 beschreibt gefärbte PU-Schäume, die chemisch eingebaute Farbstoffe enthalten und durch Einarbeitung der Dispersion eines freie Amino- oder Hydroxylgruppen enthaltenden Farbstoffs in das PU-bildende Reaktionsgemisch erhalten werden.

DE-A-2 340 443 bezieht sich auf einen polymeren Farbstoff, wobei ein Chromophor als Metallkomplexfarbstoff mit einem Polyisocyanat kondensiert wird, um ein linearen Polyadditionsprodukt mit Polyharnstoff- oder Polyurethanbindungen herzustellen; der Chromophor kann auch mit einem entsprechenden reaktionsfähigen Prepolymeren umgesetzt werden; das gefärbte Polymer kann als Elastomer oder auch als Lösung oder Emulsion vorliegen.

EP-E-14 962 beschreibt Offset Druckfarben, erhalten durch trockenes Mahlen eines Phthalocyanins mit einem Naphthyl- oder Methylendiphenyl-di-Alkyl/Alkenylharnstoff.

FR-A-2 442 257 bezieht sich auf vernetzbare Farbstoffe, erhalten durch einseitige Kondensation eines Chromophors mit einem Diisocyanat und weitere Reaktion der freien Isocyanatgruppe mit einer reaktiven (OH) ethylenisch ungesättigten Verbindung.

In der vorliegenden Erfindung werden Druckfarben, insbesondere Buch- und Offsetdruckfarben vorgestellt, die - verglichen mit den herkömmlichen Druckfarben auf Pigmentbasis - erhebliche Vorteile in der Lasur, der Brillanz, dem Glanz der Drucke oder der Farbtiefe ermöglichen, gegebenenfalls auch in mehreren oder sogar allen der genannten Punkte Vorteile bieten.

Die Erfindung betrifft eine Druckfarbe enthaltend ein Farbmittel(gemisch), gegebenenfalls einen Firnis sowie gegebenenfalls einen oder mehrere Zusatzstoffe wie Sikkative, Hautverhinderungsmittel und Verlaufmittel, dadurch gekennzeichnet, daß das Farbmittel(gemisch) mindestens einen Farbstoff der Formel

$$F(Y-\underset{\underset{O}{\|}}{C}-NHR)_n \qquad II$$

enthält, in der bedeuten

F einen Farbstoffrest,

Y eine direkte Bindung oder den Rest einer an die NCO-Funktion addierbaren Gruppen -Y-H,

R einen organischen Rest der Formel

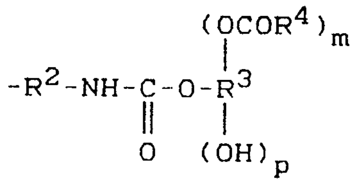

wobei die Gesamtzahl der C-Atome der n R-Reste ≧ 18 ist

n 1, 2, 3, 4, 5 oder 6, wobei für n ≧ 2 die Reste

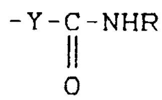

gleich oder verschieden sein können.

$R^2$ einen organischen Rest,

$R^3$ einen aliphatischen Rest,

$R^4$ einen aliphatischen oder aromatischen, gegebenenfalls substituierten Kohlenwasserstoffrest mit 4 bis 22 C-Atomen,

m 1, 2, 3, 4, 5 und

p 0, 1, 2, 3, 4, 5,

Bevorzugte Farbmittel(gemische) sind erhältlich durch Umsetzung von etwa 3 bis etwa 70 Gew,-% des Farbstoffs der Formel I

$F(Y'H)_n$ I

in der

F einen Farbstoffrest,

Y' -O-, -S-,

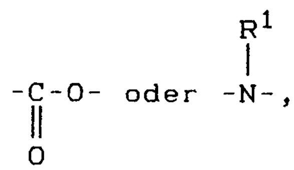

$R^1$ Wasserstoff, Alkyl, vorzugsweise $C_1$-$C_4$-Alkyl, Cycloalkyl, vorzugsweise Ccylopentyl und Cyclohexyl und

n 1, 2, 3, 4, 4 oder 6 bezeichnen,

mit etwa 97 bis etwa 30 Gew.-% eines isocyanatgruppenhaltigen Harzes, das durch Umsetzung von

a) etwa 8 bis etwa 35 Gew.-% eines Polyalkohol(gemisch)s mit 2-6 OH-Gruppen,

b) etwa 15 bis etwa 80 Gew.-% einer Monocarbonsäure oder eines Monocarbonsäuregemischs,

c) etwa 0 bis etwa 50 Gew.-% einer Dicarbonsäure oder eines Dicarbonsäuregemischs,

d) etwa 0 bis etwa 50 Gew.-% eines aliphatischen, cycloaliphatischen oder aromatischen Diisocyanat(gemisch)s, dessen Isocyanatgruppen bei der Bildung des Harzes alle umgesetzt werden und

e) etwa 9 bis etwa 75 Gew.-% eines aliphatischen, cycloaliphatischen oder aromatischen Diisocyanats oder eines Gemisches von Diisocyanaten, wobei die einzelnen Diisocyanate nach der Bildung des Harzes im Durchschnitt je eine unumgesetzte Isocyanatgruppe behalten, erhältlich ist.

(Es sei darauf hingewiesen, daß die einmal gegebene Definition eines Restes oder Indexes im folgendem Text, auch im anderen Zusammenhang, beibehalten wird).

$R^2$ steht bevorzugt für Alkylen, Cycloalkylen oder Arylenreste z.B. für

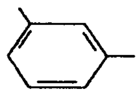 , 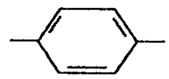 , 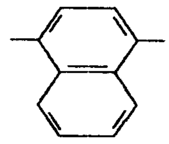 , 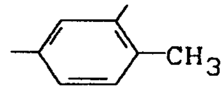 ,

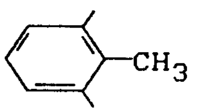 , 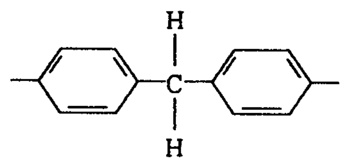 , 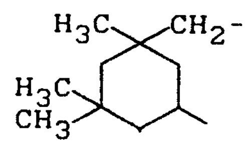

$-CH_2CH_2CH_2CH_2CH_2CH_2-$, 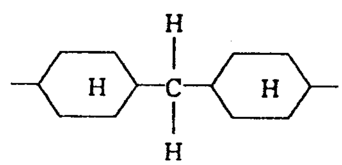

$R^3$ steht bevorzugt für einen Alkylrest, besonders bevorzugt einen $C_1$-$C_8$-Alkylrest, der durch O-Atome unterbrochen und, z.B. durch $C_1$-$C_6$-Alkoxy, substituiert sein kann; für den Fall, daß $R^3$ sich von einem Zuckeralkohol ableitet, kann $R^3$ auch eine cyclische Ethergruppierung aufweisen.

$R^4$ bezeichnet bevorzugt einen aliphatischen oder einen aromatischen Kohlenwasserstoffrest, die 4-23 C-Atome aufweisen können und, z.B. durch -OH, -COOH, =O, Halogen (Chlor), substituiert sein können. Der aliphatische Rest kann acyclisch oder cyclisch, gesättigt oder ungesättigt sein; der ungesättigte Rest enthält bevorzugt 1-3 Doppelbindungen. Beim aromatischen Rest handelt es sich bevorzugt um einen Phenylrest.

Die Farbstoffe $F(Y'H)_n$, von denen sich F ableitet, können den verschiedensten Farbstoffklassen angehören, beispielsweise der Triphenylmethan-, Oxazin-, Dioxazin-, Thiazin-, Nitro-, Anthrachinon-, Cumarin-, Chinophthalon-, Benzodifuranon-, Perylen-, Naphthalimid-, insbesondere aber der Azo-(Monoazo-), Phthalocyanin oder Methinreihe.

Die erfindungsgemäßen Farbstoffe werden in einer typischen Ausführungsform hergestellt durch Umsetzung von

1. 3-70 Gew.-%, bevorzugt 3-55 Gew.-%, besonders bevorzugt 20 bis 40 Gew.-% eines organischen Farbstoffes der Formel $F(Y'H)_n$ mit

2. 97-30 Gew.-%, bevorzugt 97-45 Gew.-%, besonders bevorzugt 80-60 Gew.-%, einer NCO-funktionellen Verbindung.

Das NCO-funktionelle Harz (2) soll dabei bevorzugt auf folgenden Komponenten aufgebaut werden:

(A) 8-35 Gew.-%, besonders bevorzugt 10-25 Gew.-%, eines oder mehrerer Polyalkohole mit 2-6 Hydroxylgruppen,

(B) 15-80 Gew.-%, besonders bevorzugt 25-70 Gew.-% einer Monocarbonsäure oder eines Monocarbonsäuregemisches ausgewählt aus den Gruppen a) der im wesentlichen ungesättigten natürlichen oder isomerisierten natürlichen Fettsäuregemische, b) der im wesentlichen gesättigten natürlichen Fettsäuren oder c) den synthetischen aliphatischen, geradkettigen oder verzweigten Fettsäuren, d) der monocyclischen, cycloaliphatischen Monocarbonsäuren, e) den polycyclischen, gegebenenfalls ungesättigten natürlichen (terpenoiden) oder aus diesen durch Isomerisierung, Hydrierung oder partielle Dehydrierung gewonnenen Harzsäuren, sowie f) der aromatischen, gegebenenfalls alkylsubstituierten $C_{6-14}$-Monocarbonsäuren.

(C) 0 bis 50 Gew.-%, besonders bevorzugt 0 bis 35 Gew.-% einer (oder mehrerer) aliphatischen, cycloaliphatischen oder aromatischen Dicarbonsaure(n) oder ihrer veresterbaren Derivate,

(D) 0 bis 50 Gew.-%, besonders bevorzugt 0 bis 35 Gew.-% eines (oder mehrerer) aliphatischen, cycloaliphatischen oder aromatischen Diisocyanats (e), wobei im wesentlichen beide NCO-Gruppen umgesetzt werden und

(E) 9 bis 75 Gew.-%, besonders bevorzugt 20 bis 60 Gew.-% eines (oder mehrerer) aliphatischen, cycloaliphatischen oder aromatischen Diisocyanate (e), wobei solche Diisocyanate mit zwei NCO-Gruppen unterschiedlicher Reaktivität ganz besonders bevorzugt sind, mit der Maßgabe, daß die Summe aus (A), (B), (C), (D) und (E) 100 % beträgt und die Isocyanate der Komponente (E) in der Hauptsache durchschnittlich mit nur einer ihrer NCO-Gruppen reagieren und die zweite, gegebenenfalls weniger reaktive, im wesentlichen unumgesetzt bleibt.

Die Umsetzung der Komponenten (A) bis (E) zum NCO-funktionellen Harz (2) wird dabei vorteilhaft so durchgeführt, daß zunächst (A) mit (B), (C) und (D) zu einem OH-funktionellen Praekondensat umgesetzt werden, welches anschließend mit (E) zum Harz (2) umgesetzt wird. Sollen Produkte aus natürlichen Fettsäuren - (B), Gruppen a) und b) - hergestellt werden, so kann es vorteilhaft sein, diese Fettsäuren in Form der in der Natur vorkommenden Öle (Triglyceride) einzusetzen und die Öle mit Polyalkoholen (A) nach den bekanten Verfahren zu hydroxyfunktionellen Partialesterzwischenprodukten umzuestern, welche dann mit (C), (D) und (D), gegebenenfalls auch direkt mit (E) zum Harz (2) umgesetzt werden können.

Beispiele für geeignete Polyalkohole (Komponente A)), die den Rest $R^3$ enthalten, sind: Ethylenglykol, 1,2-Propylenglykol, 1,3-Propandiol, 1,2-Buylenglykol, 2,3-Butylenglykol, 1,3-Butandiol, 1,4-Butandiol, 1,6-Hexandiol, Diethylenglykol, Triethylenglykol, Glycerin, Trimethylolethan, Trimethylolpropan, Pentaerythrit, 2,2,2',2'-Tetramethylol-di-n-butylether, Dipentaerythrit, Diglycerin, Zuckeralkohole wie Xylit, Mannit, Sorbit, wobei zu berücksichtigen ist, daß diese Alkohole bei der Veresterung mit Carbonsäuren durch Bildung cyclischer innerer Ether ihre durchschnittliche effektive Funktionalität um etwa 2 verringern.

Beispiele für Monocarbonsäuren $R^4$-COOH (Komponente (B)) sind aus der Gruppe a) der trocknenden und halbtrocknenden natürlichen bzw. aus den natürlichen durch Isomerisierung gewonenen Fettsäuren: Leinölfettsäure, Sojaölfettsäure, Baumwollsaatölfettsäure, Erdnußölfettsäure, (Kon)Juvandolfettsäure, Ricinensäure (aus natürlichem Ricinusöl bzw. Ricinolsaure durch Dehydratisierung gewonnen), Oiticicaölfettsäure, Tallölfettsäure, Safflorölfettsäure.

Ein Beispiel für Monocarbonsäuren (B) $R^4$-COOH aus der Gruppe b) der im wesentlichen gesättigten natürlichen Fettsäuren ist Kokosfettsäure. Auch die aus den natürlichen Fettsäuregemischen z.B. durch Fraktionierung gewonnenen Fettsäureschnitte, die hauptsächlich $C_{22}$-Monocarbonsäure (Behensäure), $C_{18}$-Monocarbonsäure (Stearinsäure) oder $C_{16}$-Monocarbonsäure (Palmitinsäure) neben Säuren höherer oder niederer C-Zahl enthalten, sollen hier beispielhaft genannt werden.

Beispiele für Monocarbonsäuren (B) $R^4$-COOH aus der Gruppe c) der synthetischen gesättigten Fettsäuren sind Isooctansäure, Isononansäure und Isotridecansäure.

Typische Monocarbonsäuren (B) $R^4$-COOH sind aus der Gruppe d) der cycloaliphatischen, gegebenenfalls olefinisch ungesättigten Monocarbonsäuren, die $C_6$- bzw. $C_7$-Carbonsäuren Cyclopentancarbonsäure, Ccylohexancarbonsaure, 1,4,5,6-Tetrahydrobenzoesäure.

Beispiele für Monocarbonsäuren (B) $R^4$-COOH aus der Gruppe e) der gegebenenfalls substituierten aromatischen Monocarbonsäuren sind Benzoesäure, 3-Methylbenzoesäure, 4-Methylbenzoesäure, 4-tert.-Butylbenzoesäure, 4-Chorbenzoesäure, Anissäure.

Beispiele für Monocarbonsäuren (B) $R^4$-COOH aus der Gruppe f) der Harzsäuren bzw. Kolophoniumabkömmlinge sind Abietinsäure, Dehydroabietinsäure, Neoabietinsäure, Pimarsäure, Isopimarsaure, Lävopimarsäure usw.

Beispiele für geeignete Dicarbonsäuren (C) entsprechend HOOC-$R^6$-COOH bzw. deren veresterbare Derivate sind Bernsteinsäure(anhydrid), Glutarsäure(anhydrid), Adipinsäue, Pimelinsaure, Azelainsäure, Suberinsäure, Sebacin säure, Dodecandisäure, Cyclohexan-1,2-dicarbonsäure(anhydrid), 1,2,3,6-Tetrahydrophthalsäure(anhydrid), Phthalsäure(anhydrid), Isophthalsäure. Mögliche aber weniger bevorzugte Beispiele sind ungesättigte aliphatische Säuren wie Fumarsäure, Maleinsäure(anhydrid), Itaconsäure.

Für den Fall, daß die erfindungsgemäße Druckfarbe ein Farbmittel(gemisch) und gegebenenfalls einen oder mehrere Zusatzstoffe, jedoch keinen Firnis enthält, handelt es sich bei dem Farbmittel der Formel II um ein farbstoffmodifiziertes Harz, d.h. der Farbstoff ist in den Firnis chemisch eingebaut.

Vorzugsweise enthalten die erfindungsgemäßen Druckfarben jedoch das Farbmittel der Formel II in Abmischung mit einem Firnis. Der Firnis enthält z.B. Alkydharze, Urethanalkyde, Hartharze, Leinölstandöle und Mineralöle, die zusammengemischt oder verkocht werden können.

Die erfindungsgemäßen Druckfarben können in bekannter Weise für den Druck verwendet werden.

Die Buch- oder Offsetdruckfarben können nach den üblichen Verfahren für den Bogen-, bevorzugt für den Rollen-Buch- und Offsetdruck eingesetzt werden. Es ist dabei möglich, Vierfarbdrucke mit geeigneten Schwarzpigmenten (Ruß) und den drei Farbtönen der Trichromie herzustellen, bei denen alle drei Farbtöne (Magenta, Cyan, Gelb) mittels der erfindungsgemäß eingesetzten Farbstoffe erzeugt werden. Ebenso ist es aber möglich, nur zwei Farbtöne, bevorzugt Gelb und Magenta, mit den erfindungsgemäß verwendeten Farbstoffen einzustellen. Schließlich ist es auch möglich, für einen oder mehrere Farbtöne, Druckfarbpigmente und die erfindungsgemäß eingesetzten Farbstoffe nebeneinander zu verwenden.

Die gemeinsame Anwendung von Farbstoffen gemäß der vorliegenden Erfindung und Pigmenten in Druckfarben kann z.B. dann vorteilhaft sein, wenn es darum geht, einen besonders homogenen Flächendruck zu erzielen, eine Druckfarbe zu nuancieren, einen Druck mit organischen Pigmenten hinsichtlich seiner Brillanz zu verbessern, die Lasur eines Pigmentdrucks zu steigern, im Viertondruck die Eigenschaften von Ruß hinsichtlich Brillanz und Glanz und Transparenz zu verbessern oder die Rheologie herkömmlicher Bogen- oder Rollen-Buch- oder Offsetdruckfarben zu verbessern.

Da volle Verträglichkeit mit den herkömmlichen Buch- und Offsetdruckfarben auf Pigmentbasis besteht, kann die Zugabe der erfindungsgemäßen einsetzbaren Farbmittel der Formel II in jedem beliebigen Verhältnis erfolgen.

Die Erfindung betrifft demzufolge auch Druckfarben, insbesondere Buch- und Offsetdruckfarben enthaltend ein Farbmittel(gemisch), gegebenenfalls einen Firnis sowie gegebenenfalls einen oder mehrere Zusatzstoffe, wie Sikkative, Hautverhinderungsmittel, und Verlaufmittel, dadurch gekennzeichnet, daß das Farbmittel(gemisch) zusätzlich zu einem Pigment oder Ruß mindestens einen Farbstoff der Formel I enthält.

Im folgenden werden einige zur Herstelung von Farbmitteln der Formel II vorzugsweise verwendbare Farbstofftypen der Formel $(F(Y'H)_n$ beispielhaft aufgeführt.

A. Pyridonazofarbstoffe mit 1-4 Hydroxygruppen der Formel

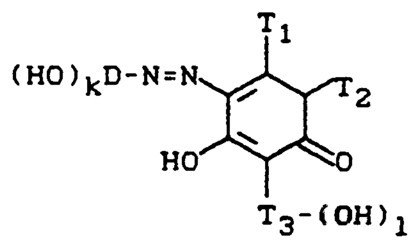

V

in der

| | |
|---|---|
| D | den Rest eine Diazokomponente, |
| $T_1$ | Alkyl, Aryl, $-COOT_4$, |
| $T_2$ | H, -CN, $-COOT_4$, $-CONH-T_5(OH)_1$ |
| $T_3$ | aliphatische oder araliphatische Reste, die durch ein oder mehrere Sauerstoffatome unterbrochen sein können, |
| $T_4$ | Wasserstoff, Alkyl, |
| $T_5$ | aliphatische oder araliphatische Reste, die durch ein oder mehrere Sauerstoffatome unterbrochen sein können, |
| k, l | 0, 1, 2, 3 oder 4, mit der Maßgabe, daß die Summe aus k + l 1, 2, 3 oder 4 beträgt, bezeichnen. |

D steht vorzugsweise für einen Phenylrest, der 1-4 Substituenten aus der Reihe gegebenenfalls substituiertes $C_1$-$C_{12}$-Alkyl, $C_2$-$C_{12}$-Alkenyl, Cyclohexyl, Cyclopentyl, Cyclohexenyl, Halogen wie Cl, Br, F, $C_1$-$C_6$-Alkoxy, gegebenenfalls substituiertes Phenoxy, -CN, $-CF_3$, $-NO_2$, gegebenenfalls substituiertes $C_1$-$C_{18}$-Alkylsulfonyl, gegebenenfalls substituiertes Phenylsulfonyl, gegebenenfalls substituiertes Benzylsulfonyl, gegebenenfalls substituiertes Phenoxysulfonyl, gegebenenfalls substituiertes Carbamoyl, gegebenenfalls substituiertes Sulfamoyl tragen kann.

Die Alkylreste in $C_1$-$C_{12}$-Alkyl und $C_1$-$C_{18}$-Alkylsulfonyl können z.B. durch -OH, $C_1$-$C_6$-Alkoxy oder -CN substituiert sein. Die Phenylreste in Phenoxy, Phenylsulfonyl, Phenoxysulfonyl und Benzylsulfonyl können z.B. durch $C_1$-$C_4$-Alkyl oder Halogen wie Cl und Br substituiert sein.

Die Carbamoylgruppen tragen vorzugsweise zwei gleiche oder verschiedene Substituenten aus der Reihe $C_1$-$C_{18}$-Alkyl, die z.B. durch -OH substituiert sein können, $C_2$-$C_{18}$-Alkenyl, Aryloxyalkyl, $C_9$-$C_{11}$-Aralkoxyalkyl, $C_7$-$C_{11}$-Aralkyl, $C_4$-$C_{13}$-Acyloxyalkyl, $C_6$-$C_{14}$-Alkoxycarbonyloxyalkyl, $C_6$-$C_{12}$-Alkylaminocarbonyloxyalkyl, $C_4$-$C_9$-Dialkylaminoalkyl; entsprechende Diazokomponenten sind aus der DE-A-1 3 111 648 bekannt.

Die Sulfamoylgruppen tragen bevorzugt 1 oder 2 Substituenten aus der Reihe $C_1$-$C_{18}$-Alkyl, gegebenenfalls durch O unterbrochenes und gegebenenfalls durch Hydroxy oder Phenoxy substituiertes $C_1$-$C_{12}$-Alkyl oder $C_7$-$C_{11}$-Aralkyl; entsprechende Diazokomponenten sind aus der EP-A-1 18 567 bekannt.

Als Beispiele für Diazokomponenten seien genannt:

Anilin, o-, m- und p-Toluidin, o- und p-Ethylanilin, 2,3-Dimethylanilin, 3,4-Dimethylanilin, 2,4-Dimethylanilin, 2,5-Dimethylanilin, o-i-Propylanilin, p-i-Propylanilin, 2,4,5- und 2,3,5-Trimethylanilin, 2-Methyl-5-i-propylanilin, 4-tert.-Butylanilin, 4-sec.-Butylanilin, Anilin, das durch geradkettiges oder verzweigtes $C_{12}$-$C_{25}$-Alkyl o- oder p-ständig substituiert ist, 4-Cyclohexylanilin, 4-Cyclohexyl-2-methylanilin, 4-(1-Cyclohexen-1-yl)-anilin, o-, m- und p-Chloranilin, 2,3-, 2,4-, 2,5- und 3,4-Dichloranilin, 5-Chlor-2-methylanilin, 4-Chlor-2-methylanilin, 3-Chlor-2-methylanilin, 2-Chlor-5-methylanilin, 4-Chlor-3-methylanilin, 3-Chlor-4-methylanilin, 2-Chlor-3,4-dimethylanilin, 5-Chlor-2,4-dimethylanilin, 4-Chlor-2,5-dimethylanilin, o-, m- und p-Nitroanilin, 2-Chlor-4-nitroanilin, 2-Nitro-4-chloranilin, 2-Methyl-4-nitroanilin, 4-Methyl-2-nitroanilin, 2,4-Dimethyl-5-nitroanilin, 2,5-Dimethyl-4-nitroanilin, 4-i-Propyl-2-nitroanilin, 4-tert.-Butyl-2-nitroanilin, 4-Cyclohexyl-2-nitroanilin, o-, m- und p-Methoxyanilin, 2-Ethoxy- und 4-Ethoxyanilin, 2-Phenoxyanilin, 2-(2-Methylphenoxy)-anilin, 5-Chlor-2-methoxyanilin, 5-Chlor-2-phenoxyanilin, 5-Chlor-2-(4-chlorphenoxy)-anilin, 4,5-Dichlor-2-methoxyanilin, 2-Methoxy-5-nitroanilin, 2-Methoxy-4-nitroanilin, 3-Chlor-4-methoxyaniiln, 4-Methoxy-2-nitroanilin, 4-Ethoxy-2-nitroanilin, 4-Ethoxy-3-nitroanilin, 3-Methoxy-4-methylanilin, 4-Methoxy-2-methylanilin, 2-Methoxy-5-methylanilin, 2-Ethoxy-5-methylanilin, 4-Chlor-2-methoxy-5-methylanilin, 4-Chlor-2,5-dimethoxyanilin, 2,5-Dimethoxy-4-nitroanilin, 2-(Phenylsulfonyl)-anilin, 2-(Methylsulfonyl)-4-nitroanilin, 2-Methoxy-5-(phenylsulfonyl)-anilin, 5-(Benzylsulfonyl)-2-methoxyanilin, 5-(Ethylsulfonyl)-2-methoxyanilin.

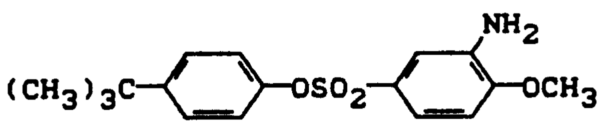 ,

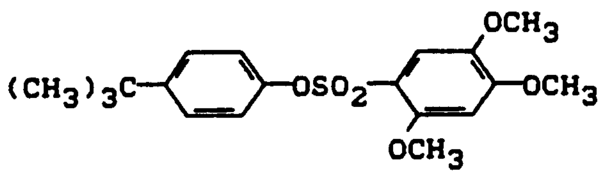 .

Für den Fall, daß k in Formel (V) >0 ist, d.h. die Diazokomponente 1-4 Hydroxygruppen aufweist, steht D vorzugsweise für einen Phenylrest, der durch Hydroxy-$C_1$-$C_{18}$-alkoxy, $-NO_2$, -CN, F, Cl, Br, $C_1$-$C_4$-Alkyl substituiert sein kann, oder durch einen Rest der Formeln

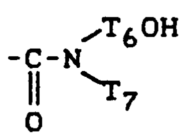 , 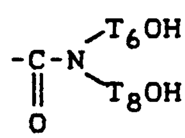 ,

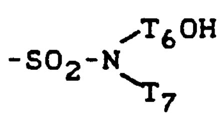 , 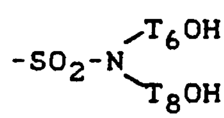

wobei

| | |
|---|---|
| $T_6$, $T_8$ | aliphatische Reste, die durch ein oder mehrere O-Atome unterbrochen sein können und |
| $T_7$ | Wasserstoff oder aliphatische oder araliphatische Reste, die durch ein oder mehrere O-Atome unterbrochen sein können, bezeichnen. |

Ebensogut können Farbstoffe verwendet werden, die zusammen mit den zur Formel V angegebenen Diazokomponenten Kupplungskomponenten aus der Pyrimidon-, Pyrazolon-, Aminopyrazol- oder Indol-Reihe enthalten.

B. Aminoazobenzol-Farbstoffe der Formel

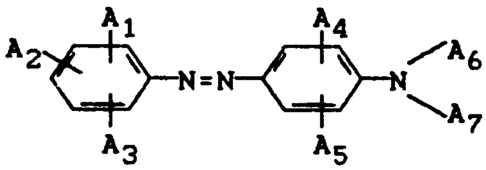

(VI)

in der

$A_1$, $A_2$, $A_3$ Wasserstoff, Halogen, wie Cl, Br, F, -CN, $-NO_2$, $C_1$-$C_6$-Alkyl, insbesondere Methyl und Ethyl, Cycloalkyl, insbesondere Cyclopentyl und Cyclohexyl, $C_1$-$C_6$-Alkoxy, insbesondere Methoxy und Ethoxy, gegebenenfalls substituiertes Phenoxy, gegebenenfalls substituiertes $C_1$-$C_{18}$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_6$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen, wie Cl, Br, F, gegebenenfalls substituiertes $C_1$-$C_6$-Alkyl, insbesondere Methyl und Ethyl, gegebenenfalls substituiertes $C_1$-$C_6$-Alkoxy, insbesondere Methoxy und Ethoxy, gegebenenfalls substituiertes -NH-CO-$C_1$-$C_6$-Alkyl, insbesondere $-NH-CO-CH_3$ und $-NH-CO-C_2-H_5$, gegebenenfalls substituiertes $-NH-SO_2$-$C_1$-$C_6$-Alkyl, insbesondere $-NH-SO_2-CH_3$ und $-NH-SO_2-C_2H_5$,

$A_5$, $A_7$ unabhängig voneinander Wasserstoff, gegebenenfalls substituiertes $C_1$-$C_{12}$-Alkyl oder $C_3$-$C_{12}$-Cycloalkyl, z.B. mit -OH, $-NH_2$, -CN substituiert, oder Reste der Formeln

$$-(CH_2-CH_2-O)_{1-4}-H$$

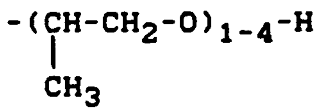

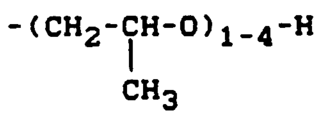

bezeichnen, mit der Maßgabe, daß der Farbstoff mindestens einen mit einem Isocyanat umsetzbaren Substituenten besitzt.

Folgende Verbindungen gemäß Formel VI werden bevorzugt eingesetzt:

1. Verbindungen, bei denen

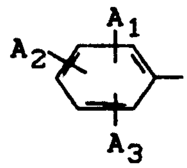

für

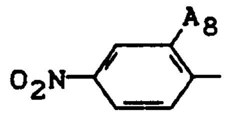

,

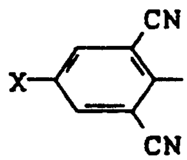

,

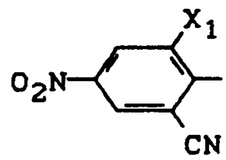

oder

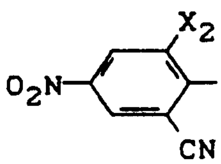

steht, wobei $A_8$ Cl, Br, CN,

X H, $CH_3$, $C_2H_5$, $C_6H_{12}$, tert.-Butyl, $C_1C_4$-Alkoxy, Cl, Br,
$X_1$ $-NO_2$, -CN, $-CF_3$, $C_1$-$C_{12}$-Alkylsulfonyl und
$X_2$ $-NO_2$, -CN bezeichnen.

2. Verbindungen, bei denen

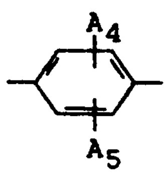

für

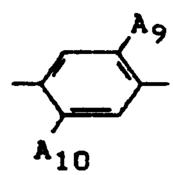

steht, wobei

$A_9$ Wasserstoff, Chlor, $C_1$-$C_4$-Alkyl, insbesondere Methyl und Ethyl, und $C_1$-$C_4$-Alkoxy, insbesondere Methoxy und Ethoxy, bezeichnet und
$A_{10}$ für Wasserstoff, Halogen, wie Cl, Br, F, gegebenenfalls substituiertes $C_1$-$C_6$-Alkyl, insbesondere Methyl und Ethyl, gegebenenfalls substituiertes Alkoxy, insbesondere Methoxy und Ethoxy, gegebenenfalls substituiertes -NH-CO-$C_1$-$C_6$-Alkyl, insbesondere -NH-CO-$CH_3$ und -NH-CO-$C_2H_5$, gegebenenfalls substituiertes -NH-$SO_2$-$C_1$-$C_6$-Alkyl, insbesondere -NH-$SO_2$-$CH_3$ und -NH-$SO_2$-$C_2H_5$ steht.

Ebensogut können Farbstoffe der Formel

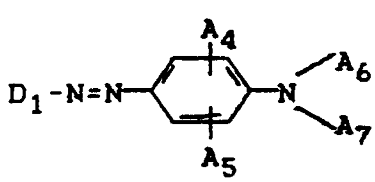

VII

verwendet werden, in der
$D_1$ den Rest einer Diazokomponente aus der Thiophen-, Thiazol-, Thiadiazol-, Benzthiazol- oder Benzisothiazol-Reihe bezeichnet.

C. Methinfarbstoffe der Formel

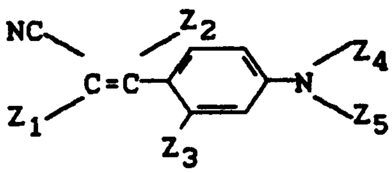

VIII

in der

| | |
|---|---|
| $Z_1$ | -CN, $-COOCH_3$, $-COOC_2H_5$, $-COOC_2H_4OH$, $-SO_2CH_3$, $-SO_2C_2H_5$, $-SO_2C_2H_4OH$, |
| $Z_2$ | H, CN, |
| $Z_3$ | $C_1$-$C_6$-Alkyl, |
| $Z_4$ | $C_1$-$C_6$-Alkyl, Hydroxy-$C_1$-$C_6$-alkyl, Phenyl, Benzyl und |
| $Z_5$ | Hydroxy-$C_1$-$C_6$-alkyl |

bezeichnen.

D. Kupferphthalocyaninfarbstoffe der Formel

$CuPc(SO_2NX_3X_4)_{1\text{-}6}$ IX

worin

| | |
|---|---|
| $X_3$ | Wasserstoff, $C_1$-$C_6$-Alkyl, Hydroxy-$C_1$-$C_6$-alkyl, Amino-$C_1$-$C_6$-alkyl und |
| $X_4$ | Hydroxy-$C_1$-$C_6$-alkyl und Amino-$C_1$-$C_6$-alkyl bezeichnen. |

E. Rhodaminfarbstoffe der Formel

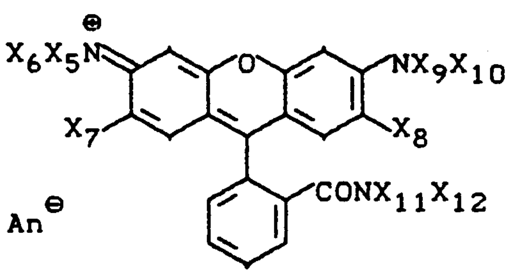

X

in der

| | |
|---|---|
| $X_5$, $X_7$, $X_5$, $X_9$ | Wasserstoff, gegebenenfalls durch Hydroxy substituiertes $C_1$-$C_6$-Alkyl, |
| $X_5$, $X_{10}$ | gegebenenfalls durch Hydroxy substituiertes $C_1$-$C_6$-Alkyl, |
| $X_{11}$ | Wasserstoff, gegebenenfalls durch Hydroxy substituiertes $C_1$-$C_6$-Alkyl, |
| $X_{12}$ | Hydrox-$C_1$-$C_6$-alkyl und |
| $An^{\ominus}$ | ein Anion bezeichnen. |

Individuelle Beispiele für Farbstoffe der Formel $F(Y'H)_n$ sind:

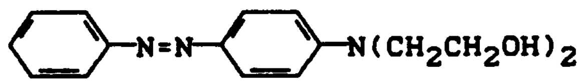

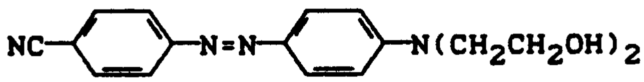

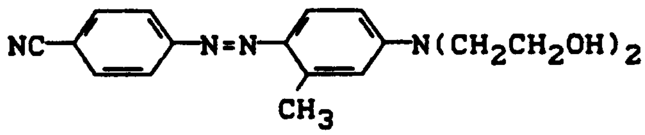

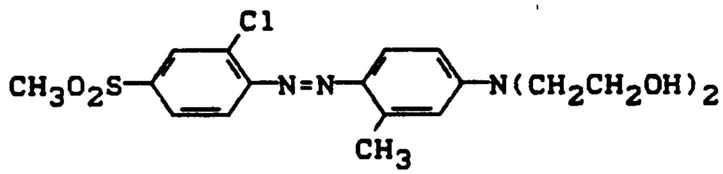

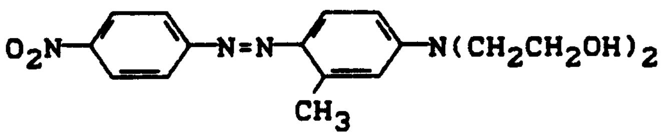

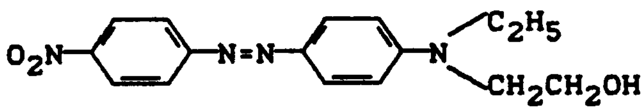

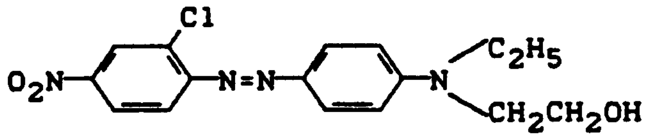

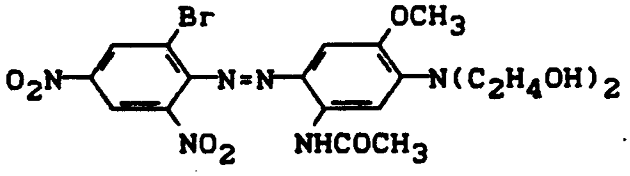

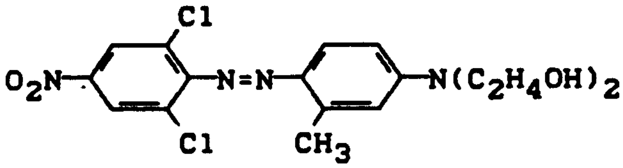

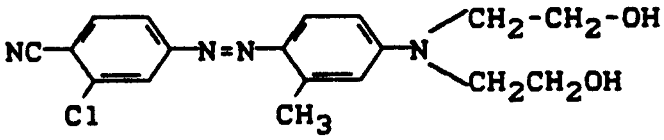

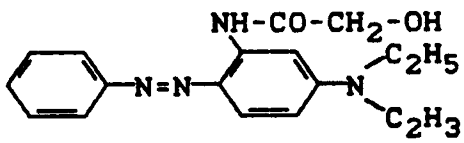

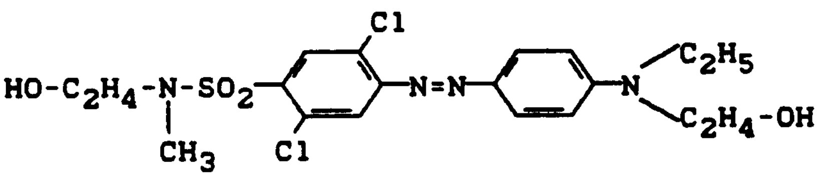

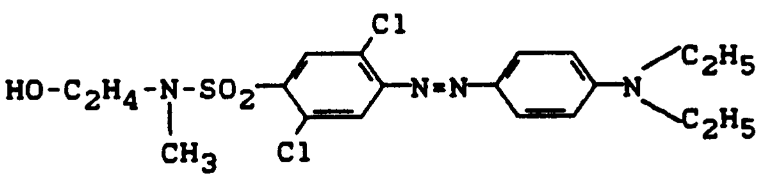

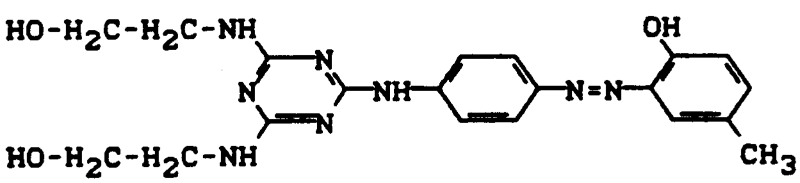

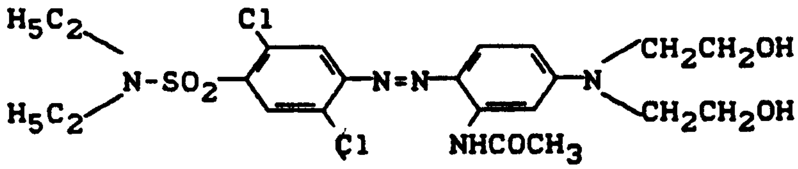

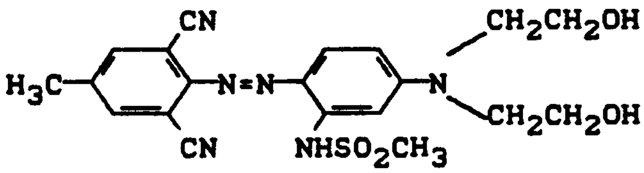

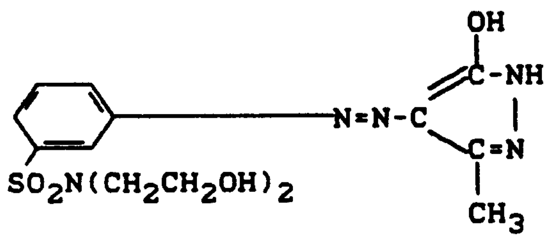

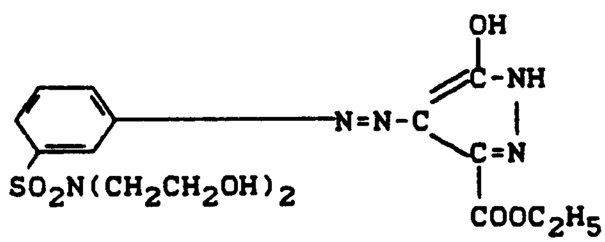

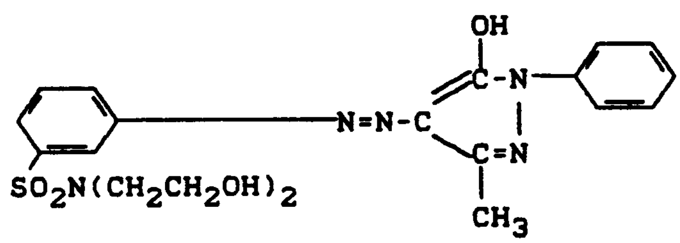

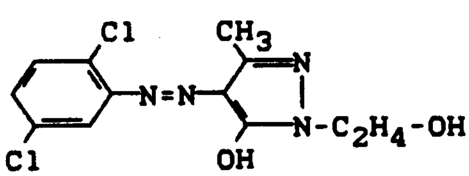

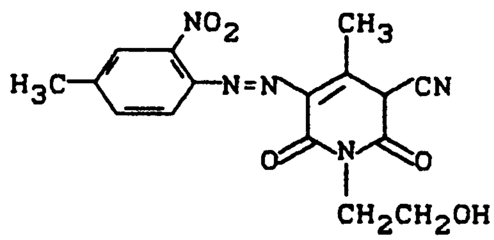

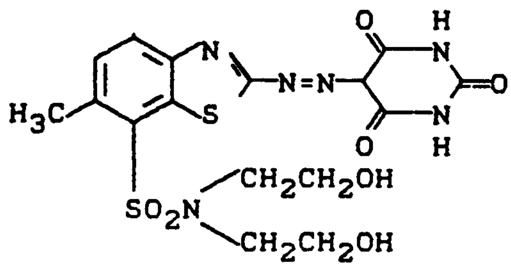

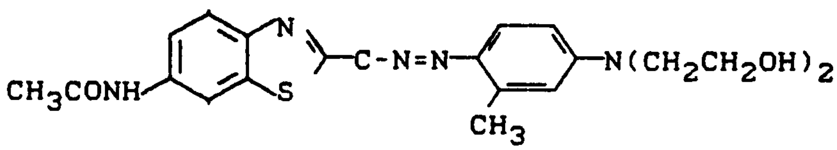

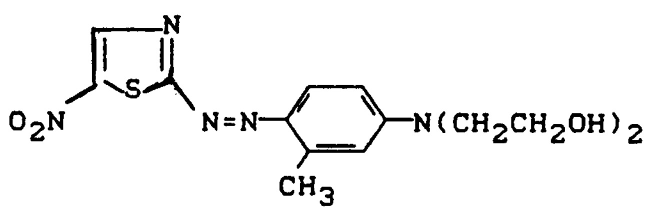

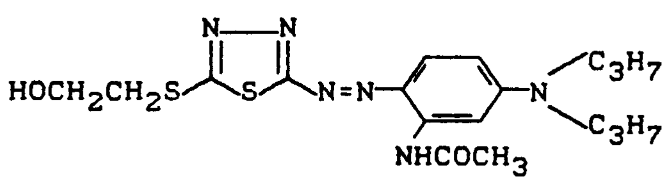

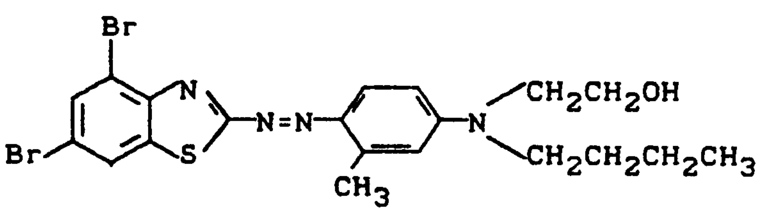

Komplexe Chromverbindung aus 1 Atom Cr und 2 Mol des Farbstoffs der Formel

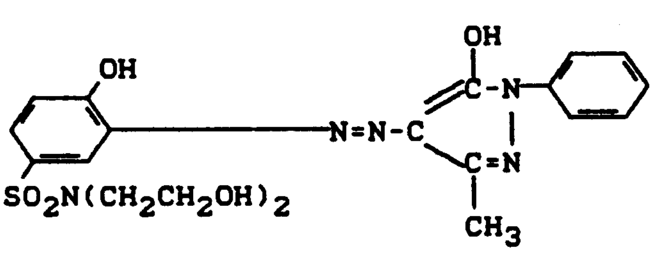

Komplexe Chromverbindungen aus 1 Atom Cr und 2 Mol des Farbstoffs der Formel

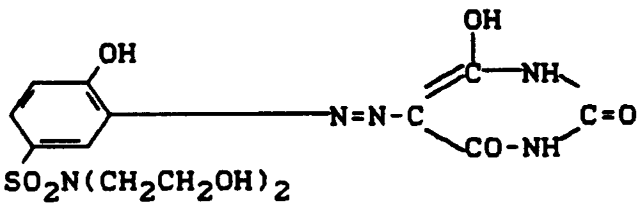

Komplexe Chromverbindung aus 1 Atom Cr und 2 Mols des Farbstoffs der Formel

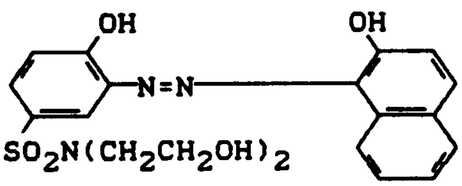

Komplexe Kobaltverbindung aus 1 Atom Co und 2 Mol des vorstehend genannten Farbstoffs.

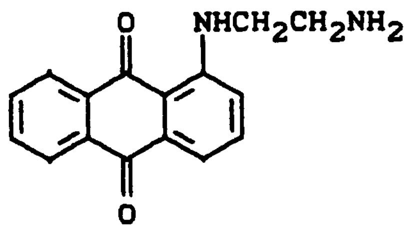

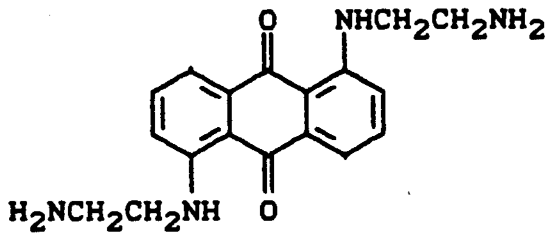

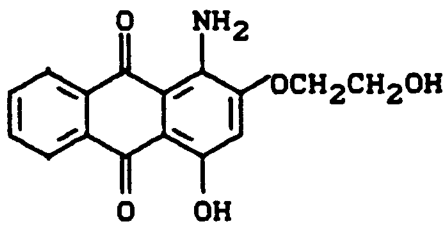

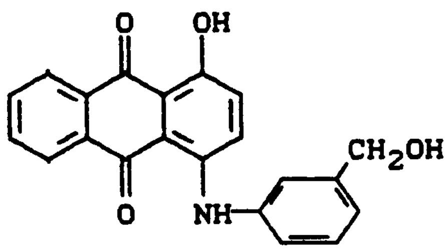

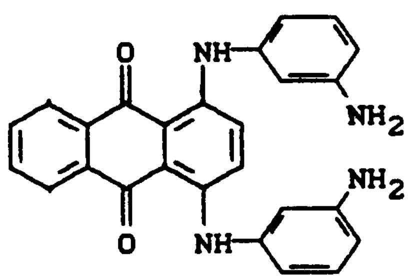

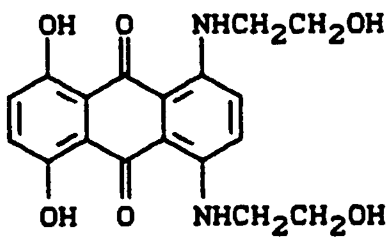

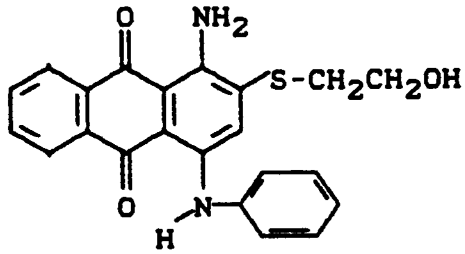

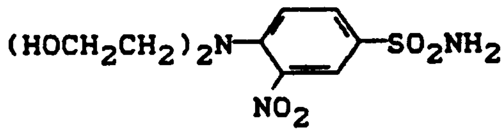

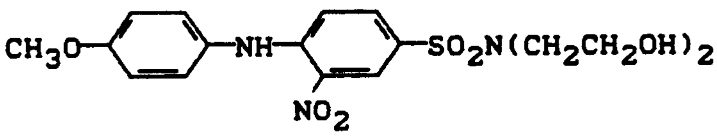

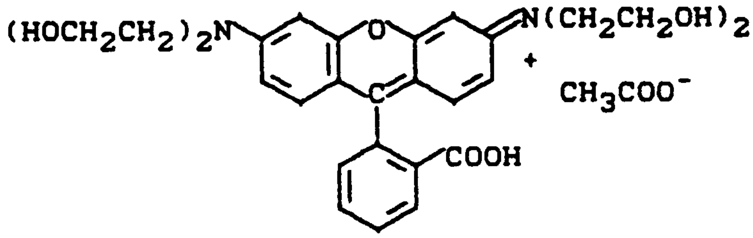

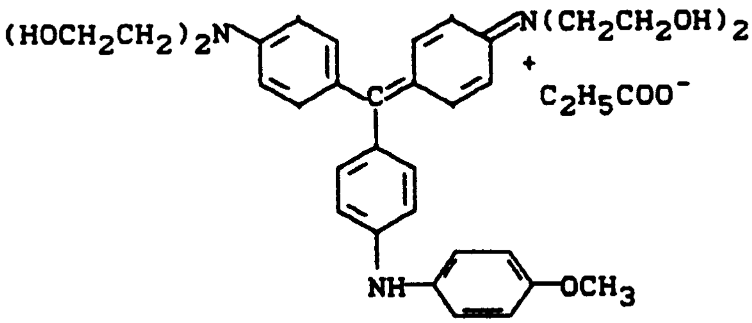

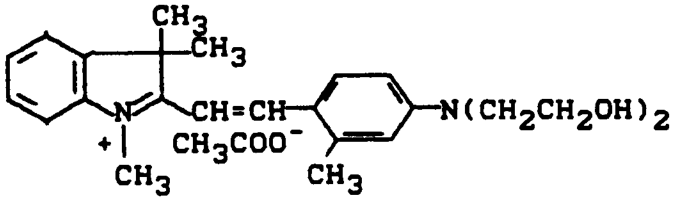

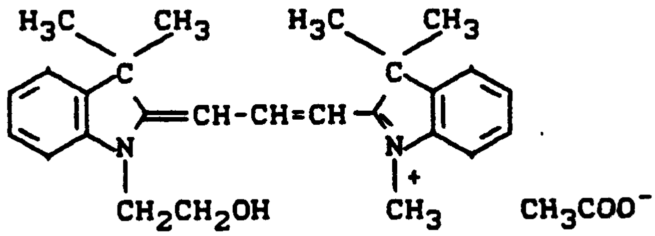

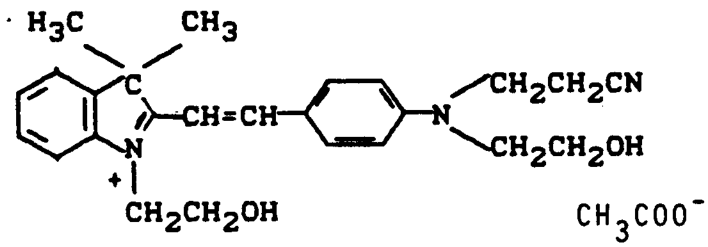

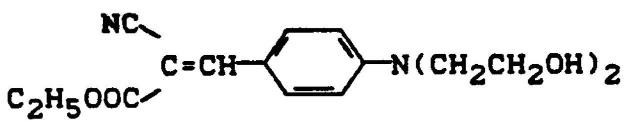

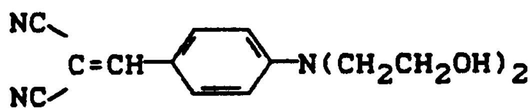

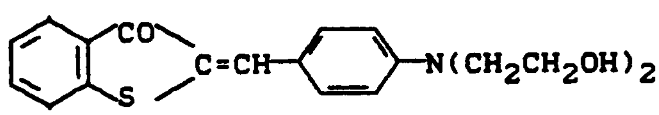

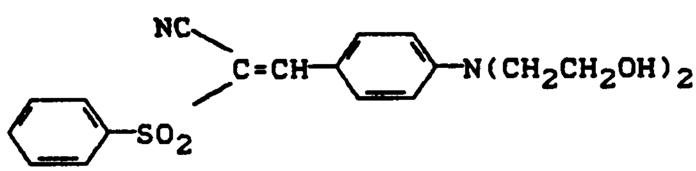

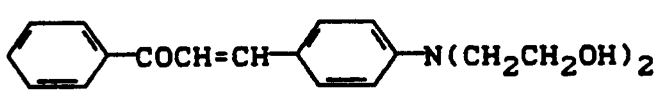

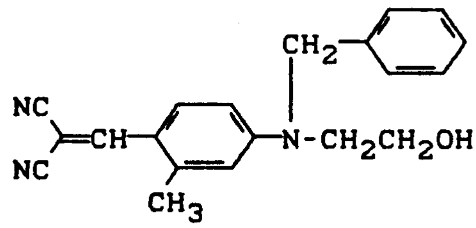

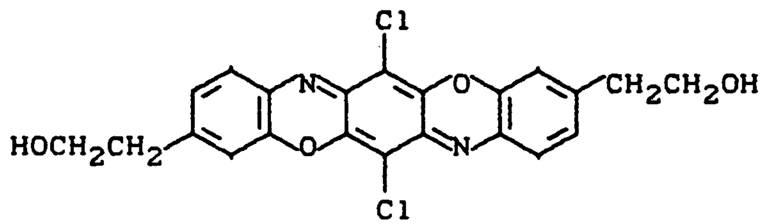

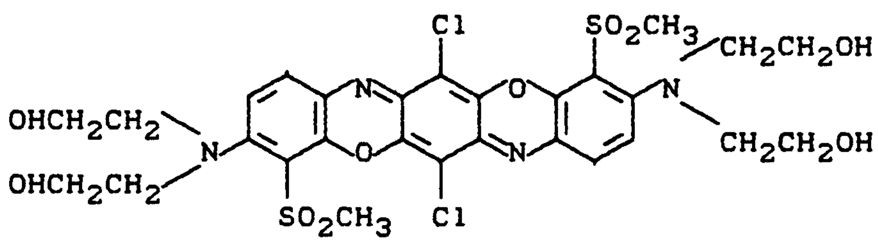

Die folgenden Beispiele dienen weiterhin der Erläuterung der Erfindung, ohne daß sie als Beschränkung aufgefaßt werden sollen. Teile sind stets Gewichtsteile. (Beispiele 1-49: Vorprodukte; Beispiele 50-119: erfindungsgemäße Produkte).

Beispiel 1. 2: Herstellung eines NCO-funktionellen Harzes

Beispiel 1 Herstellung eines Trimethylolpropan-Leinölfettsäureesters

1946 Teile Leinölfettsäure und 469 Teile Trimethylolpropan werden unter Durchleiten von Stickstoff in 1 h auf 140 °C, dann in 8 h auf 220 °C erhitzt, wobei das Reaktionswasser über eine Brücke unter einem Rückflußkühler in eine Vorlage destilliert wird. Nach 3 h bei 220 °C betrug die Säurezahl 4,2.

Beispiel 2 Herstellung des NCO-funktionellen Harzes

186,9 Teile des Harzes gemäß Beispiel 1 und 52,5 Teile Toluylendiisocyanat (technisches Gemisch mit ca. 80 Gew.-% des 2,4-Isomeren nahezu ca. 20 Gew.-% 2,6-Diisocyanatotoluol) werden unter $N_2$ 1 h bei 80 °C miteinander umgesetzt. Der Gehalt an freiem Isocyanat beträgt dann 5,28 Gew.-% (Theorie: 5,27 Gew.-%).

Beispiele 3-21 und 22-49 Herstellung von NCO-funktionellen Harzen entsprechend (2)

Beispiele 3-21 Hydroxyfunktionelle Vorprodukte

Analog Beispiel 1 werden aus Carbonsäuren und Polyalkoholen OH-funktionelle Vorstufen für die NCO-funktionellen Harze hergestellt, siehe Tabelle 1 (Abkürzungen: TMP = Trimethylolpropan, Penta = Pentaerythrit, NPG = Neopentylglykol, Adipol = 1,6-Hexandiol).

**Tabelle 1**

| Bsp. | Carbonsäure | Gew.-Tle. | Polyalkohol | Gew.-Tle. | gemessene OH-Zahl | gemessene SZ-Zahl |
|---|---|---|---|---|---|---|
| 3 | Sojaölfettsäure | 560 | TMP | 134 | 72 | 4 |
| 4 | Sojaölfettsäure | 1400 | Penta | 227 | 56 | 4 |
| 5 | Leinölfettsäure | 1390 | Penta | 227 | 64 | 4 |
| 6 | Leinölfettsäure | 1112 | Penta | 272 | 81 | 3 |
| | Benzoesäure | 244 | | | | |
| 7 | Leinölfettsäure | 1112 | Penta | 272 | 82 | 4 |
| | 4-tert.-Butyl-benzoesäure | 328 | | | | |
| 8 | Leinölfettsäure | 278 | Penta | 68 | 54 | 4 |
| | Abietinsäure | 160 | | | | |
| 9 | Leinölfettsäure | 1043 | Penta | 204 | 40 | 5 |
| | Adipinsäure | 110 | | | | |
| 10 | Leinölfettsäure | 1112 | Adipol | 472 | 154 | 2 |
| 11 | Leinölfettsäure | 556 | NPG | 208 | 134 | 1 |

T a b e l l e 1 (Fortsetzung)

| Bsp. | Carbonsäure | Gew.-Tle. | Polyalkohol | Gew.-Tle. | gemessene OH-Zahl | gemessene SZ-Zahl |
|---|---|---|---|---|---|---|
| 12 | Leinölfettsäure | 1390 | Penta | 340 | 142 | 4 |
| 13 | Hydrierte Abietinsäure | 726 | TMP | 134 | 48 | 6 |
| 14 | Konjuvandolfettsäure | 1390 | TMP | 335 | 87 | 4 |
| 15 | hydr. Abietinsäure | 362 | TMP | 134 | 62 | 4 |
| | Leinölfettsäure | 278 | | | | |
| 16 | hydr. Abietinsäure | 724 | Penta | 136 | 35 | 5 |
| | Leinölfettsäure | 278 | | | | |
| 17 | hydr. Abietinsäure | 362 | Penta | 136 | 40 | 4 |
| | Leinölfettsäure | 556 | | | | |
| 18 | Stearinsäure | 569 | Penta | 272 | 96 | 3 |
| | Benzoesäure | 488 | | | | |
| 19 | Stearinsäure | 1280 | Penta | 204 | 56 | 4 |
| 20 | Sojaölfettsäure | 560 | TMP | 268 | 371 | 4 |
| 21 | Leinölfettsäure | 834 | Penta | 272 | 89 | 4 |
| | Benzoesäure | 366 | | | | |

Beispiele 22-49 Herstellung NCO-funktioneller Harze entsprechend (2) aus den Vorprodukten 3-21

Analog Beispiel 2 werden aus den Vorprodukten 3-21 mit Isocyanaten NCO-funktionelle Harze hergestellt, siehe Tabelle 2 (Abkürzungen in den folgenden Tabellen: IPDI = Isophorondiisocyanat, HDI =

Hexamethylendiisocyanat, TDI 100 = 2,4-Diisocyanatotoluol, TDI 80 = Toluylendiisocyanat-Isoemrengemisch mit ca. 80 % 2,4-Diisocyanatotoluol und ca. 20 % 2,6-Diisocyanatotouol).

**Tabelle 2**

| NCO-funkt. Produkt Beispiel | OH-Vorprodukt gemäß Beispiel | Gew.-Teile | Diisocyanat | Gew.-Teile |
|---|---|---|---|---|
| 22 | 3 | 131,6 | IPDI | 44,4 |
| 23 | 4 | 184,4 | IPDI | 44,4 |
| 24 | 5 | 181,2 | IPDI | 44,4 |
| 25 | 6 | 304 | TDI 80 | 69,6 |
| 26 | 7 | 320,8 | TDI 80 | 69,6 |
| 27 | 8 | 189,6 | TDI 80 | 33,1 |
| 28 | 9 | 255 | HDI | 25,2 |
| 29 | 10 | 264,6 | HDI | 117,6 |
| 30 | 11 | 182 | TDI 80 | 87 |
| 31 | 12 | 147,6 | TDI 80 | 69,6 |
| 32 | 13 | 46,7 | TDI 80 | 7,0 |
| 33 | 14 | 98,1 | TDI 80 | 26,1 |
| 34 | 15 | 127,5 | TDI 80 | 26,1 |
| 35 | 16 | 143,5 | TDI 80 | 17,4 |
| 36 | 17 | 190 | TDI 80 | 26,1 |
| 37 | 18 | 122,1 | TDI 80 | 34,8 |
| 38 | 19 | 280,7 | TDI 80 | 52,5 |
| 39 | 20 | 69,2 | IPDI | 88,8 |

Weiterhin werden aus Vorprodukten der Tabelle 1 in analoger Weise (siehe Beispiel 2) mit gegenüber Tabelle 2 veränderten Diisocyanaten folgende NCO-funktionellen Harze 40-49 hergestellt (Tabelle 3).

**Tabelle 3**

| NCO-funkt. Produkt Beispiel | OH-Vorprodukt gemäß Beispiel | Gew.-Teile | Diisocyanat | Gew.-Teile |
|---|---|---|---|---|
| 40 | 3 | 131,6 | HDI | 33,6 |
| 41 | 4 | 276,6 | HDI | 50,4 |
| 42 | 5 | 181,2 | HDI | 33,6 |
| 43 | 5 | 137,1 | TDI 80 | 26,1 |
| 44 | 1 | 91,6 | TDI 100 | 17,4 |
| 45 | 1 | 130,8 | IPDI | 44,4 |
| 46 | 1 | 128,8 | HDI | 33,6 |
| 47 | 21 | 272,8 | TDI 80 | 69,6 |
| 48 | 9 | 182,3 | IPDI | 28,9 |
| 49 | 1 | 196,2 | TDI 100 | 52,2 |

Beispiel 50

306,3 g das Vorproduktes aus Beispiel 2 und 96,96 g eines gelben Methinfarbstoffes folgenden Struktur (1)

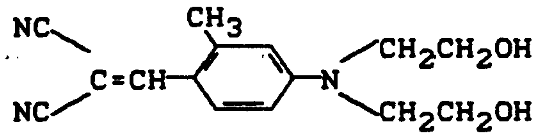

(1)

werden in 3000 ml trockenem Cyclohexanon 12 h bei 80 ° C miteinander umgesetzt; ungelöste Anteile des Farbstoffs (1) gehen im Laufe der Reaktion in Lösung. Anschließend wird Cyclohexanon bei 15 Torr, zum Schluß bei ca. 1 Torr/120 ° C Innentemperatur abdestilliert. Das Produkt ist eine glasartig feste, ganz leicht klebende Masse, die mit handelsüblichen Bogen- und Rollenbuch- und -Offsetdruck-Firnissen und Mineralölen mischbar ist.

Zu prüfen und zu drucken ist z.B. mit einer Rezeptur folgenden Zusammensetzung:

| | |
|---|---|
| 56 Gew.-Tle. | einer 50 %iger Lösung eines handelsüblichen Rollenoffsetfirnisses auf Basis einer langöligen Leinölalkydharzes und eines Harzesters, wie in den Lackrohstoff-Tabellen von Karsten, 7. Aufl. 1981, beschrieben, |
| 23 Gew.-Tle. | eines Farbkörpers, z.B. gemäß Beispiel 50, |
| 21 Gew.-Tle. | eines Mineralöls mit begrenztem Aromatengehalt und engem Siedebereich, z.B. 210/230 ° C oder 230/260 ° C. |
| 100 Gew.-Tle. | |

In der gleichen Art und Weise wie in Beispiel 50 werden Farbstoffe (1)-(24) mit Vorprodukten 2 und 22 bis 49 umgesetzt (Variante I). Bei veränderten Ansatzgrößen wird die Cyclohexanon-Menge entsprechend korrigiert. Zusätzlich sind zwei Verfahrensvarianten angegeben, bei denen vor der Abdestillation des Cyclohexanons ein handelsüblicher Offsetdruckfirnis (Mengenangabe: Firnis bzw. auf den Gesamt-Festkörpergehalt), zugemischt wird, und zwar in Variante II ein Firnis auf Urethanalkyd-Basis (Desmalkyd$^{R}$ L 181), in Variante III ein Harz auf Basis eines langöligen Leinölalkydharzes, kombiniert mit einem Harzester und/oder einem mit Kolophonium modifizierten Phenolharz.

Die Produkte werden dann als hochviskose Pasten oder glasartige Massen erhalten, die mit (weiteren) handelsüblichen Offsetdruckfarben-Bindemitteln gemischt werden können.

Beispiele 51-119

In den Beispielen 51-119 werden außerdem folgende Farbstoffe (2) bis (24) eingesetzt:

(2) 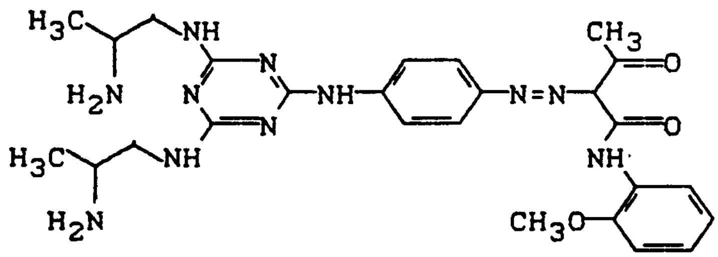 (gelb)

(3) 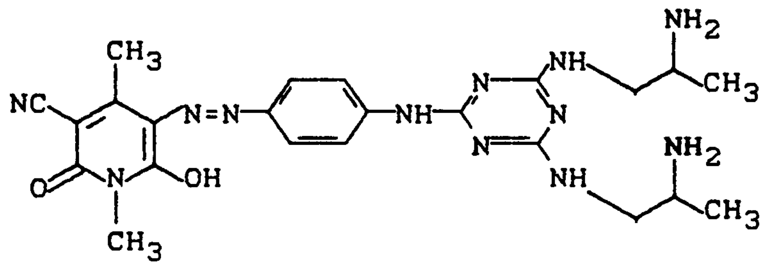 (rot)

(4) 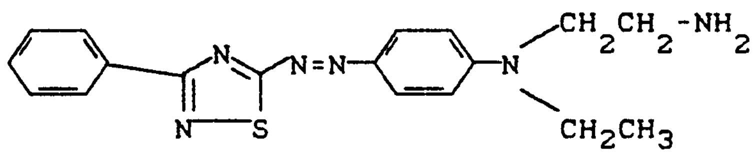 (rot)

(5) 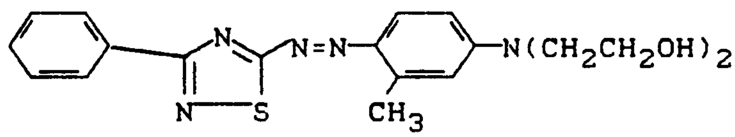 (rot)

(6) 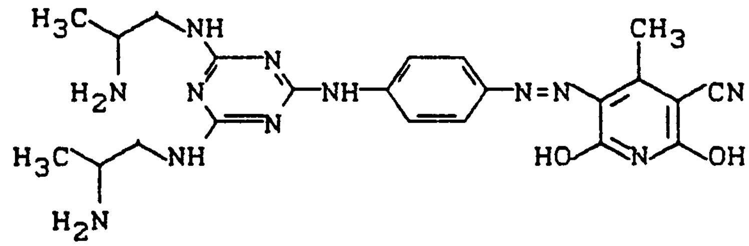 (rot)

(7) 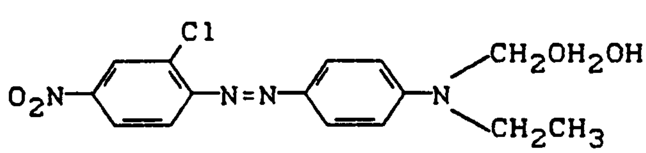 (rot)

(8) 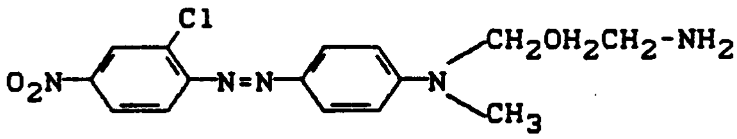 (rot)

(9) 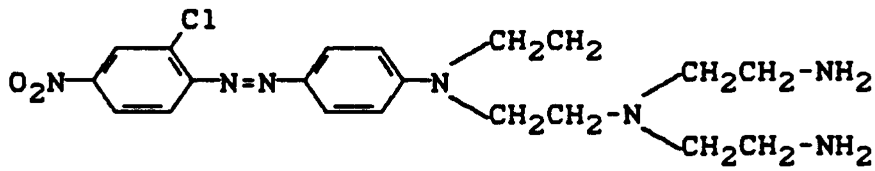 (rot)

(10) 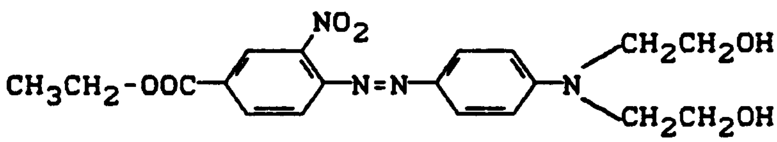 (rot)

(11) 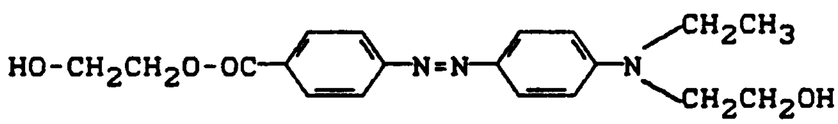 (rot)

(12) 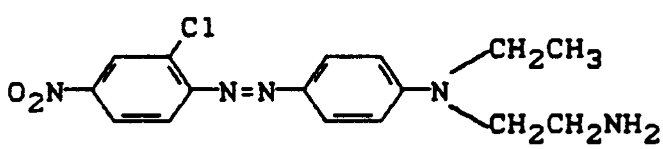 (rot)

(13) 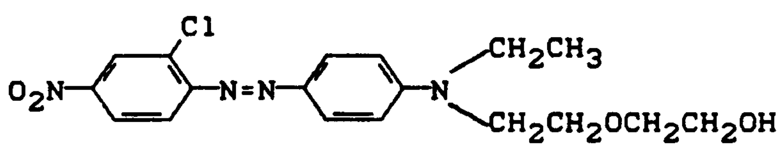 (rot)

(14) 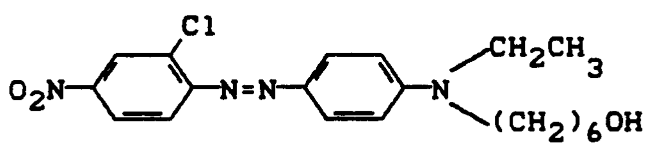 (rot)

(15) 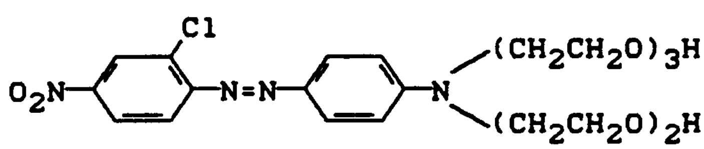 (rot)

(16) 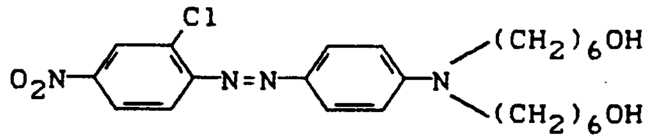 (rot)

(17) 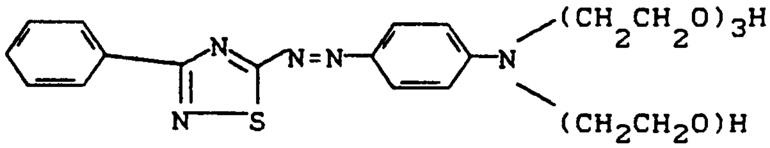 (rot)

(18) 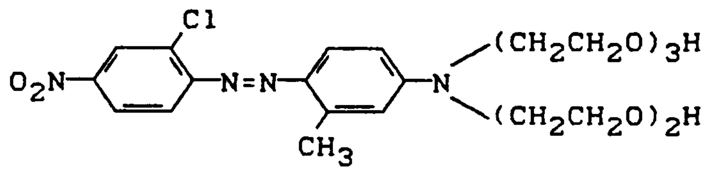 (rot)

(19) 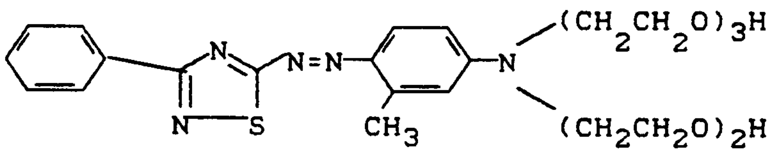 (rot)

(20) 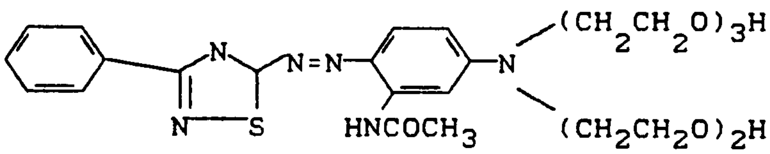 (rot)

(21) 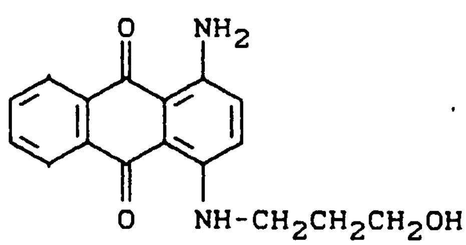 (rot)

(22) 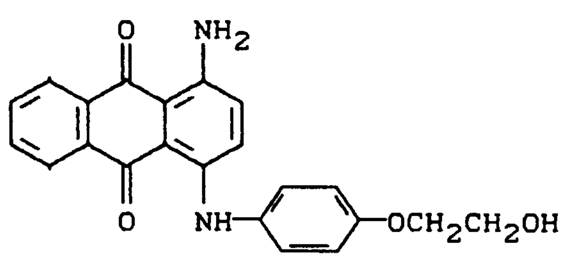 (rot)

(23) 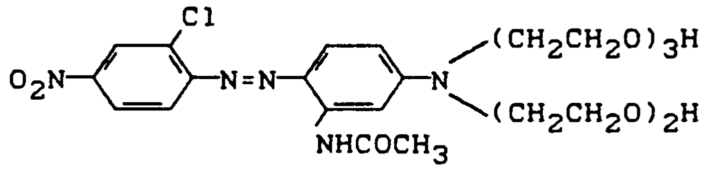

(24) 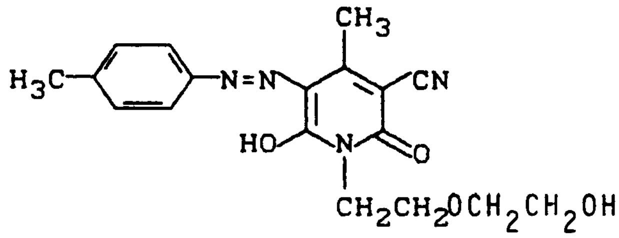

**Tabelle 4**

| Bsp. | Farbstoff | Gew.-Tle. Farbstoff | Vorprodukt NCO-funktionell aus Beispiel | Gew.-Tle. Vorprodukt | Gew.-Tle. abfiltrierter nicht umgesetzter Farbstoff | Variante | Gew.-% Firnis |
|---|---|---|---|---|---|---|---|
| 51 | (1) | 8,3 | 2 | 24,8 | - | II | 25 |
| 52 | (1) | 8,3 | 34 | 24,8 | Spur | I | - |
| 53 | (1) | 6,9 | 35 | 29,1 | 0,34 | II | 25 |
| 54 | (1) | 6,9 | 36 | 32,8 | Spur | I | - |
| 55 | (2) | 5,5 | 22 | 17,6 | 0,62 | II | 80 |
| 56 | (2) | 8,3 | 22 | 13,2 | Spur | II | 75 |
| 57 | (2) | 5,5 | 23 | 22,9 | - | II | 50 |
| 58 | (2) | 5,5 | 24 | 22,8 | - | II | 50 |
| 59 | (2) | 11,0 | 24 | 22,6 | - | II | 67 |
| 60 | (2) | 41,3 | 25 | 165,0 | - | III | 25 |
| 61 | (2) | 77,3 | 26 | 232,0 | - | III | 25 |
| 62 | (2) | 41,3 | 27 | 175,8 | - | III | 25 |
| 63 | (2) | 27,5 | 37 | 89,7 | - | I | - |
| 64 | (2) | 22,0 | 38 | 98,9 | - | I | - |
| 65 | (2) | 38,5 | 38 | 86,6 | 2,0 | I | - |
| 66 | (2) | 11,0 | 39 | 15,8 | Spur | II | 50 |
| 67 | (2) | 5,5 | 40 | 16,5 | - | II | 50 |
| 68 | (2) | 66 | 41 | 261,6 | - | II | 50 |
| 69 | (2) | 11 | 41 | 21,8 | Spur | II | 67 |
| 70 | (2) | 5,5 | 42 | 21,5 | - | II | 50 |
| 71 | (2) | 41,3 | 43 | 190,9 | - | III | 25 |
| 72 | (2) | 5,5 | 45 | 17,5 | 0,03 | II | 50 |
| 73 | (2) | 5,5 | 46 | 16,2 | - | II | 50 |

T a b e l l e 4 (Fortsetzung)

| Bsp. | Farbstoff | Gew.-Tle. Farbstoff | Vorprodukt NCO-funktionell aus Beispiel | Gew.-Tle. Vorprodukt | Gew.-Tle. abfiltrierter nicht umgesetzter Farbstoff | Variante | Gew.-% Firnis |
|---|---|---|---|---|---|---|---|
| 74 | (2) | 27,5 | 46 | 81,2 | - | III | 25 |
| 75 | (2) | 41,3 | 47 | 143,3 | - | III | 25 |
| 76 | (3) | 39,8 | 23 | 183,0 | 12,8 | II | 50 |
| 77 | (3) | 69,6 | 23 | 160,2 | 2,65 | III | 25 |
| 78 | (3) | 29,8 | 27 | 114,6 | 3,75 | III | 25 |
| 79 | (3) | 49,7 | 31 | 54,3 | 6,8 | III | 25 |
| | | | 43 | 121,7 | | | |
| 80 | (3) | 37,3 | 43 | 176,0 | 0,39 | III | - |
| 81 | (4) | 14,1 | 22 | 35,2 | - | II | 50 |
| 82 | (5) | 15,3 | 2 | 38,7 | - | II | 25 |
| 83 | (5) | 26,8 | 2 | 139,6 | 1,7 | II | 25 |
| 84 | (5) | 34,5 | 43 | 114,5 | 0,23 | II | 25 |
| 85 | (5) | 7,7 | 44 | 49,9 | Spur | II | 25 |
| 86 | (5) | 7,7 | 44 | 49,4 | Spur | III | 25 |
| 87 | (5) | 11,5 | 49 | 53,6 | Spur | III | 25 |
| 88 | (6) | 15,2 | 28 | 141,7 | | III | 25 |
| 89 | (6) | 20,2 | 48 | 142,1 | Spur | I | - |
| 90 | (7) | 10,5 | 2 | 29,3 | 0,08 | II | 25 |
| 91 | (7) | 7,0 | 25 | 21,0 | Spur | II | 25 |
| 92 | (7) | 27,9 | 29 | 43,7 | - | III | 50 |
| 93 | (7) | 17,4 | 31 | 60,9 | - | II | 25 |
| 94 | (7) | 7,0 | 31 | 24,3 | Spur | II | 25 |
| | | | 43 | 28,1 | | | |
| 95 | (7) | 8,7 | 32 | 37,5 | - | I | - |

**Tabelle 4** (Fortsetzung)

| Bsp. | Farbstoff | Gew.-Tle. Farbstoff | Vorprodukt NCO-funktionell aus Beispiel | Gew.-Tle. Vorprodukt | Gew.-Tle. abfiltrierter nicht umgesetzter Farbstoff | Variante | Gew.-% Firnis |
|---|---|---|---|---|---|---|---|
| 96 | (7) | 34,9 | 43 | 111,1 | - | II | 25 |
| 97 | (7) | 7,0 | 44 | 26,0 | 0,11 | II | 25 |
| 98 | (8) | 7,0 | 43 | 22,2 | 1,78 | II | 25 |
| 99 | (9) | 8,7 | 2 | 37,3 | 0,16 | II | 25 |
| 100 | (10) | 6,0 | 2 | 26,0 | - | II | 25 |
| 101 | (10) | 10,1 | 30 | 26,9 | - | I | - |
| 102 | (11) | 6,0 | 2 | 26,0 | - | II | 25 |
| 103 | (12) | 10,4 | 2 | 26,0 | - | II | 25 |
| 104 | (13) | 9,8 | 2 | 21,6 | - | II | 25 |
| 105 | (14) | 10,1 | 2 | 21,0 | - | II | 25 |
| 106 | (15) | 9,9 | 2 | 35,7 | - | II | 25 |
| 107 | (15) | 12,4 | 2 | 22,3 | - | II | 25 |
| 108 | (16) | 4,8 | 22 | 16,6 | - | II | 25 |
| 109 | (16) | 4,8 | 2 | 8,3 | - | II | 25 |
| 110 | (17) | 8,0 | 2 | 27,4 | - | II | 25 |
| 111 | (18) | 7,7 | 2 | 27,4 | - | II | 25 |
| 112 | (19) | 8,4 | 2 | 27,4 | - | II | 25 |
| 113 | (20) | 8,4 | 2 | 24,8 | - | II | 25 |
| 114 | (20) | 8,4 | 33 | 24,8 | - | II | 25 |
| 115 | (21) | 8,9 | 2 | 24,8 | - | II | 25 |
| 116 | (22) | 11,2 | 2 | 24,8 | 3,8 | II | 25 |
| 117 | (23) | 11,6 | 2 | 33,5 | 0,2 | I | - |
| 118 | (1) | 48,8 | 2 | 32,4 | - | I | - |
| 119 | (24) | 124,7 | 2 | 29,8 | - | I | - |

## Patentansprüche

1. Druckfarbe enthaltend ein Farbmittel(gemisch), gegebenenfalls einen Firnis sowie gegebenenfalls einen oder mehrere Zusatzstoffe wie Sikkative, Hautverhinderungsmittel und Verlaufmittel, dadurch gekennzeichnet, daß das Farbmittel(gemisch) mindestens einen Farbstoff der Formel

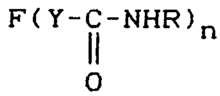 II

enthalt, in der bedeuten

F einen Farbstoffrest,

Y eine direkte Bindung oder den Rest einer an die NCO-Funktion addierbaren Gruppen -Y-H,

R einen organischen Rest der Formel

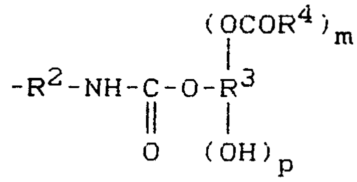

wobei die Gesamtzahl der C-Atome der n R-Reste ≧ 18 ist

n 1, 2, 3, 4, 5 oder 6, wobei für n ≧ 2 die Reste

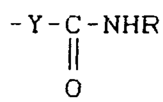

gleich oder verschieden sein können.

$R^2$ einen organischen Rest,

$R^3$ einen aliphatischen Rest,

$R^4$ einen aliphatischen oder aromatischen, gegebenenfalls substituierten Kohlenwasserstoffrest mit 4 bis 23 C-Atomen,

m 1, 2, 3, 4, 5 und

p 0, 1, 2, 3, 4, 5.

**2.** Druckfarbe gemäß Anspruch 1 enthaltend einen Firnis.

**3.** Buch- oder Offsetdruckfarbe gemäß wenigstens einem der Ansprüche 1-2.

**4.** Druckfarbe gemäß wenigstens einem der Ansprüche 1-3, dadurch gekennzeichnet, daß F für den Rest eines Farbstoffs der Triphenylmethan-, Oxazin-, Dioxazin-, Thiazin-, Nitro-, Anthrachinon-, Cumarin-, Chinophthalon-, Benzodifuranon-, Perylen- oder Naphthalimid-Reihe steht.

**5.** Druckfarbe gemäß wenigstens einem der Ansprüche 1-4, enthaltend einen Farbstoff der Formel II, in der Y für -O-, -S- oder

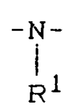

steht,
wobei $R^1$ H, Alkyl oder Cycloalkyl bedeutet.

**6.** Druckfarbe gemäß wenigstens einem der Ansprüche 1-5, dadurch gekennzeichnet, daß F für den Rest eines Farbstoffes aus der Azo- (Monoazo-), Phthalocyanin- oder Methin-Reihe steht.

7. Druckfarbe gemäß wenigstens einem der Ansprüche 1-6, dadurch gekennzeichnet, daß das Farbmittel(gemisch) mindestens einen Farbstoff enthalt, der durch Umsetzung von 3-70 Gew.-% eines Farbstoffs der Formel

$F(Y'H)_n$ I

in der
F einen Farbstoffrest
Y' -O-, -S-,

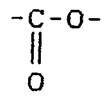 oder 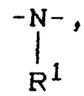,

$R^1$ Wasserstoff, Alkyl oder Cycloalkyl und n 1, 2, 3, 4, 5 und 6 bezeichnen,
mit 97-30 Gew.-% einer NCO-funktionellen Verbindung hergestellt worden ist.

8. Druckfarbe gemäß Anspruch 7, dadurch gekennzeichnet, daß der Farbstoff durch Umsetzung von 3-55 Gew.-% eines Farbstoffs der Formel ($F(Y'H)_n$ mit 97-45 Gew.-% einer NCO-funktionellen Verbindung hergestellt worden ist.

9. Druckfarbe gemäß wenigstens einem der Ansprüche 1-8 enthaltend wenigstens ein Pigment.

10. Druckfarbe gemäß wenigstens einem der Ansprüche 1 bis 9 , dadurch gekennzeichnet, daß sie aufgebaut ist auf Basis eines Pyridonazofarbstoffes und eines NCO-funktionellen Harzes auf Basis von
(A) 8 bis 35 Gew.-% eines oder mehrerer Polyalkohole mit 2 bis 6 Hydroxylgruppen
(B) 15 bis 80 Gew.-% einer Monocarbonsäure oder eines Monocarbonsäuregemisches ausgewählt aus den Gruppen a) der im wesentlichen ungesättigten natürlichen oder isomerisierten natürlichen Fettsäuregemische, b) der im wesentlichen gesättigten natürlichen Fettsäuren oder c) den synthetischen aliphatischen, geradkettigen oder verzweigten Fettsäuren, d) der monocyclischen, cycloaliphatischen Monocarbonsäuren, e) den polycyclischen, gegebenenfalls ungesättigten natürlichen (terpenoiden) oder aus diesen durch Isomerisierung, Hydrierung oder partielle Dehydrierung gewonnenen Harzsäuren, sowie f) der aromatischen, gegebenenfalls alkylsubstituierten $C_{6-14}$-Monocarbonsäuren.
(C) 0 bis 50 Gew.-% einer (oder mehrerer) aliphatischen, cycloaliphatischen oder aromatischen Dicarbonsäure(n) oder ihrer veresterbaren Derivate.
(D) 0 bis 50 Gew.-% eines (oder mehrerer) aliphatischen, cycloaliphatischen oder aromatischen Diisocyanats (e), wobei im wesentlichen beide NCO-Gruppen umgesetzt werden und
(E) 9 bis 75 Gew.-% eines (oder mehrerer) aliphatischen, cycloaliphatischen oder aromatischen Diisocyanate (e), mit der Maßgabe, daß die Summe aus (A), (B), (C), (D) und (E) 100 % beträgt und die Isocyanate der Komponente (E) in der Hauptsache durchschnittlich mit nur einer ihrer NCO-Gruppen reagieren und die zweite, gegebenenfalls weniger reaktive, im wesentlichen unumgesetzt bleibt.

## Claims

1. Printing ink containing a colorant (mixture), if desired a varnish, and if desired, one or more additives such as siccatives, anti-skinning agents and flow-improving agents, characterised in that the colorant (mixture) contains at least one dyestuff of the formula

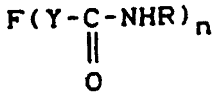

II,

in which

- F denotes a dyestuff radical,
- Y denotes a direct bond or the radical of a group -Y-H which can undergo an addition reaction with the NCO function,
- R denotes an organic radical of the formula

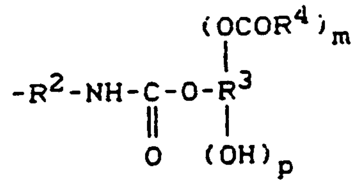

the total number of C atoms of the n R radicals being ≧ 18

- n denotes 1, 2, 3, 4, 5 or 6 (when n ≧ 2 the radicals

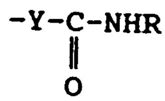

can be identical or different),

- $R^2$ denotes an organic radical,
- $R^3$ denotes an aliphatic radical,
- $R^4$ denotes an aliphatic or aromatic, substituted or unsubstituted hydrocarbon radical having 4 to 23 C atoms,
- m denotes 1, 2, 3, 4, 5 and
- p denotes 0, 1, 2, 3, 4, 5.

**2.** Printing ink according to Claim 1 containing a varnish.

**3.** Book printing or offset printing ink according to at least one of Claims 1-2.

**4.** Printing ink according to at least one of Claims 1-3, characterised in that F represents the radical of a dyestuff from the triphenylmethane, oxazine, dioxazine, thiazine, nitro, anthraquinone, coumarin, quinophthalone, benzodifuranone, perylene or naphthalimide series.

**5.** Printing ink according to at least one of Claims 1-4, which contains a dyestuff of the formula II, in which Y represents -O-, -S- or

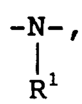

in which $R^1$ denotes H, alkyl or cycloalkyl.

**6.** Printing ink according to at least one of Claims 1-5, characterised in that F represents the radical of a dyestuff from the azo (monoazo), phthalocyanine or methine series.

**7.** Printing ink according to at least one of Claims 1-6, characterised in that the colorant (mixture) contains at least one dyestuff prepared by reaction of 3-70% by weight of a dyestuff of the formula

$F(Y'H)_n$ I

in which

- F represents a dyestuff radical

Y' represents -O-, -S-,

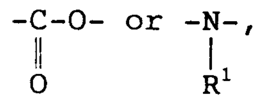

$R^1$ represents hydrogen, alkyl or cycloalkyl and n represents 1, 2, 3, 4, 5 and 6, with 97-30% by weight of an NCO-functional compound.

**8.** Printing ink according to Claim 7, characterised in that the dyestuff has been prepared by reaction of 3-55% by weight of a dyestuff of the formula $(F(Y'H)_n$ with 97-45% by weight of an NCO-functional compound.

**9.** Printing ink according to at least one of Claims 1-8, which contains at least one pigment.

**10.** Printing ink according to at least one of Claims 1 to 9, characterised in that it has been synthesised on the basis of a pyridone azo dyestuff and an NCO-functional resin based on
(A) 8 to 35% by weight of one or more polyalcohols having 2 to 6 hydroxyl groups,
(B) 15 to 80% by weight of a monocarboxylic acid or a monocarboxylic acid mixture selected from groups a) the essentially unsaturated natural or isomerised natural fatty acid mixtures, b) the essentially saturated natural fatty acids or c) the synthetic aliphatic, straight-chain or branched fatty acids, d) the monocyclic, cycloaliphatic monocarboxylic acids, e) the polycyclic, saturated or unsaturated natural (terpenoid) resin acids or resin acids obtained from the former by isomerisation, hydrogenation or partial dehydrogenation, and f) the aromatic, unsubstituted or alkyl-substituted $C_{6-14}$-monocarboxylicacids.
(C) 0 to 50% by weight of one (or more) aliphatic, cycloaliphatic or aromatic dicarboxylic acid(s) or esterifiable derivatives thereof.
(D) 0 to 50% by weight of one (or more) aliphatic, cycloaliphatic or aromatic diisocyanate(s), in which substantially both NCO groups have been reacted, and
(E) 9 to 75% by weight of one (or more) aliphatic, cycloaliphatic or aromatic diisocyanate(s), with the proviso that the sum of (A), (B), (C), (D) and (E) is 100% and the isocyanates of component (E) predominantly react on average with only one of their NCO groups and the second one, which may be less reactive, remains substantially unreacted.

## Revendications

**1.** Encre d'impression contenant une matière colorante (mélange), éventuellement un vernis ainsi que, le cas échéant, un ou plusieurs additifs tels que des siccatifs, des agents empêchant la formation d'une pellicule et des agents d'étalement, caractérisée en ce que la matière colorante (mélange) contient au moins un colorant de formule

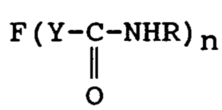 II

dans laquelle
F est un reste d'un colorant,
Y est une liaison directe ou le reste d'un groupe -Y-H pouvant s'additionner sur la fonction NCO,
R est un reste organique de formule

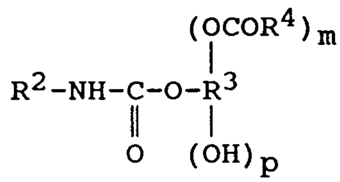

dans laquelle le nombre total d'atomes de carbone des n restes R est supérieur ou égal à 18

- n a la valeur 1,2, 3, 4, 5 ou 6, et lorsque n a une valeur supérieure ou égale à 2, les restes

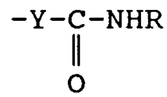

peuvent être identiques ou différents,

- $R^2$ est un reste organique,
- $R^3$ est un reste aliphatique,
- $R^4$ est un reste hydrocarboné en $C_4$ à $C_{23}$, aliphatique ou aromatique éventuellement substitué,
- m a la valeur 1, 2, 3, 4 ou 5 et
- p a la valeur 0, 1, 2, 3, 4 ou 5.

**2.** Encre d'impression suivant la revendication 1, contenant un vernis.

**3.** Encre typographique ou d'impression offset suivant au moins l'une des revendications 1 et 2.

**4.** Encre d'impression suivant au moins l'une des revendications 1 à 3, caractérisée en ce que F représente le reste d'un colorant de la série du triphénylméthane, de l'oxazine, de la dioxazine, de la thiazine, des colorants nitrés, de l'anthraquinone, de la coumarine, de la quinophtalone, de la benzodifurannone, du pérylène ou du naphtalimide.

**5.** Encre d'impression suivant au moins l'une des revendications 1 à 4, contenant un colorant de formule II, dans laquelle Y représente -O-, -S- ou

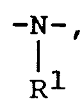

$R^1$ représentant H ou un groupe alkyle ou cycloalkyle.

**6.** Encre d'impression suivant au moins l'une des revendications 1 à 5, caractérisée en ce que F est le reste d'un colorant de la série azoïque (mono-azoïque), de la série de phtalocyanines ou de la série de la méthine.

**7.** Encre d'impression suivant au moins l'une des revendications 1 à 6, caractérisée en ce que la matière colorante (mélange) contient au moins un colorant qui a été préparé par réaction de 3 à 70 % en poids d'un colorant de formule

$F(Y'H)_n$ I

dans laquelle

- F est un reste d'un colorant
- Y' représente -O-, -S-,

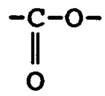 ou 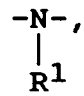

$R^1$ est l'hydrogène, un groupe alkyle ou cycloalkyle et n a les valeurs 1, 2, 3, 4, 5 et 6, avec 97-30 % en poids d'un composé à fonctionnalité NCO.

**8.** Encre d'impression suivant la revendication 7, caractérisée en ce que le colorant a été préparé par réaction de 3 à 55 % en poids d'un colorant de formule $F(Y'H)_n$ avec 97-45 % en poids d'un composé à fonctionnalité NCO.

**9.** Encre d'impression suivant au moins l'une des revendications 1 à 8, contenant au moins un pigment.

**10.** Encre d'impression suivant au moins l'une des revendications 1 à 9, caractérisée en ce qu'elle est établie sur la base d'un colorant pyridone-azoïque et d'une résine à fonctionnalité NCO à base

(A) de 8 à 35 % en poids d'un ou plusieurs polyalcools ayant 2 à 6 groupes hydroxyle

(B) de 15 à 80 % en poids d'un acide monocarboxylique ou d'un mélange d'acides monocarboxyliques choisis dans les groupes a) de mélanges d'acides gras naturels principalement non saturés ou naturels isomérisés, b) des acides gras naturels principalement saturés ou c) des acides gras synthétiques aliphatiques à chaîne droite ou ramifiée, d) des acides monocarboxyliques cycloaliphatiques monocycliques, e) des acides résiniques polycycliques naturels éventuellement non saturés (terpéniques) ou obtenus à partir de ces acides par isomérisation, hydrogénation ou déshydrogénation partielle, ainsi que f) des acides monocarboxyliques en $C_6$ à $C_{14}$ aromatiques, portant éventuellement des substituants alkyle,

(C) de 0 à 50 % en poids d'un (ou de plusieurs) acide(s) dicarboxylique(s) aliphatique(s), cycloaliphatique(s) ou aromatique(s) ou de leurs dérivés estérifiables,

(D) de 0 à 50 % en poids d'un (ou plusieurs) diisocyanate(s) aliphatique(s), cycloaliphatique(s) ou aromatique(s), dans lesquels les deux groupes NCO ont essentiellement réagi et

(E) de 9 à 75 % en poids d'un (ou plusieurs) diisocyanate(s) aliphatique(s), cycloaliphatique(s) ou aromatique(s), sous réserve que la somme de (A), (B), (C), (D) et (E) s'élève à 100 % et que les isocyanates du composant (E) réagissent principalement en moyenne avec un seul de leurs groupes NCO et que le second groupe éventuellement moins réactif reste essentiellement intact.